# EUROPEAN PATENT SPECIFICATION

(11) **EP 0 553 086 B1**
(45) Date of publication and mention of the grant of the patent: **21.01.1998**
(21) Application number: 91911682.2
(22) Date of filing: 01.07.1991
(51) Int. Cl.: B62B 1/08, B66F 9/06

(54) **SELF ELEVATING FORKLIFT TRUCK**
SELBSTHEBENDER GABELSTAPLER
CHARIOT A FOURCHE AUTO-ELEVATEUR

(30) Priority: 26.10.1990 FI 903417
(43) Date of publication of application: 04.08.1993
(73) Proprietor: Innolift Oy Ab, 02401 Kirkkonummi (FI)
(72) Inventor: JÄRVINEN, Pekka, SF-03100 Nummela (FI)
(74) Representative: Lehmann, Klaus, Dipl.-Ing.
(86) International application number: FI9100206
(87) International publication number: WO9207746

(56) References cited:
- WO-A-83/04226
- DE-A- 2 530 634
- GB-A- 2 023 097
- US-A- 4 049 083
- US-A- 4 061 237
- US-A- 4 180 363
- US-A- 4 239 249
- US-A- 4 613 272

## Description

The present invention relates to a wheeled lifting device and a method applicable in its use. By means of the device it is possible to load and unload e.g. vehicles. The device is also fit for ascending and descending stairs with a load.

Striving for minimization of storages for example in enterprises has increased the number of deliveries and consequently the volume of delivery traffic in the enterprise sector. As various heavier household appliances have become more common and rapid development has reduced their lifespan, the delivery traffic between households and shops has grown.

It is no longer common to have a so-called helper in support of the driver even in heavier delivery vans. Vehicles are usually provided with different tail lifts which enable the lowering of the transportable load from the platform down onto ground level. The moving of the load on the platform from the loading space to the tail lift is carried out by means of different fork lift trucks or other known facilities. With the aid of these it is also possible to move the load also on ground level in the vicinity of the vehicle. The problematic points in the delivery of goods are constituted by even small numbers of stairs, located e.g. between the immediate surroundings of the delivery van and the goods lift of an office building or similar. One single stair makes the use of a known hand pallet truck impossible. As the driver of the delivery van often works alone when delivering goods, even a light delivery van must be provided with a tail lift or similar to allow loading and unloading. Even light tail lifts are relatively expensive and cost in Finland about FIM 20,000, mounting included. In small delivery vans the said stationary lifting devices also take substantially room inside the vehicle. Besides the tail lifts, the vehicles must also be provided with other means for moving the load both in and outside the vehicle. Through e.g. patent documents US 4,061,237 and PCT/US83/00858 have previously become known motor driven fork lift trucks which are capable of ascending to the loading space of a vehicle. These forklift trucks are specially adapted only to be stored on the rear portion of transport trucks or lorries for transporting them to other locations and operating them there as usual mobile forklift trucks. For the respective use of such forklift truck the platform of the corresponding transport truck comprises special stirrups and a support arm to carry the forklift truck protruding over the rear edge of the transport truck's loading platform. It is impossible to lift the disclosed forklift truck being loaded onto the platform of the truck and to move the load on the platform. The transport wheels and trucklifting auxiliary wheels mounted on the side of the load carrying constructional elements of the truck body are direction-bound. Only a single hydraulic drive wheel is rotatably mounted in the body of the carriage.

The devices described above in the patent documents US 4,061,237 and PCT/US83/00858 are expensive and very complicated as regards their functioning. They can be considered for use in lighter delivery vans. A lifting device utilizing a rotating screw and provided with one pair of wheels is fit for the use referred to but only with light loads. Loads exceeding 100 kg by weight absolutely call for two persons for manoeuvring the controls, and as told above, this is often impossible in the use dealt with here.

The DE-OS 25 30 634 discloses a device for self-storage of a mobile forklift truck on top of a transport truck or the like. Also that forklift being loaded is not adapted to lift itself onto a different platform and further to move the load on the platform. For that purpose the forklift has to deposit the load onto the platform, to move itself unloaded to a different area of the platform, to lift itself and again to reload the load for further movement thereof. This device and loading requires unneccessarily provided spare room on the platform and a complicated time wasting loading technique.

The US 4,613,272 discloses a truck that necessitates two separate carriages in order to function. A carriage, which comprises a lifting device and a power supply for lifting, does not disclose supports that are horizontally movable with respect to the body of the device, said supports being provided with at least two axles for wheels.

A forklift truck according to WO 83/04226 does not, either, disclose horizontal supports that are movable with respect to the body and provided with double pairs of wheels. This known truck calls for a telescope hydraulic cylinder the end of which is provided with a wheel.

Through the device and method according to the invention it is possible to substantially remedy the drawbacks described above. To realize this, it is characteristic of the device according to the invention what has been disclosed in claim 1. As the greatest advantage provided by the invention can be regarded the fact that it makes it possible to move the load in the loading space of the vehicle, lower it from the vehicle onto ground level, and move it on ground level, even in stairs connected to it, by means of a device that is safe to use and has low manufacturing costs. Tail lifts or similar, having to be mounted stationary in the vehicle, may be abandoned and no other accompanying moving devices are needed.

In the following preferred embodiments of the invention are described in detail with reference to the attached drawing.
Fig. 1 shows a side view of the device according to the invention.
Fig. 2 shows a front view of the same as fig. 1.
Fig. 3 shows a side view of the device according to the invention, but with the load lowered down in the loading space of the vehicle.
Fig. 4 shows the same as fig. 3 but with the supporting wheels used in planar moving moved into a lifting position.
Fig. 5 shows the same as Fig. 4 but with the wheels lifted onto the plane of the platform.
Fig. 6 shows the same as fig. 5 but with the supporting wheels again moved into the position used in planar moving.
Fig. 7 shows a side view of the device according to the invention in the stage of planar moving on the platform of the vehicle.
Fig. 8 shows in detail how the supporting arm of the lifting device according to the invention is attached to the body.

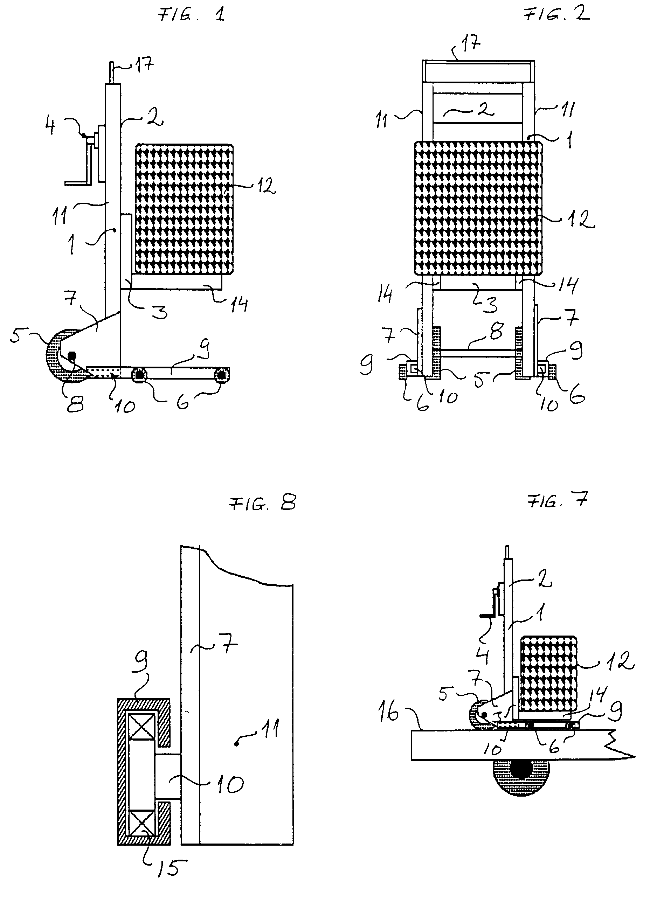

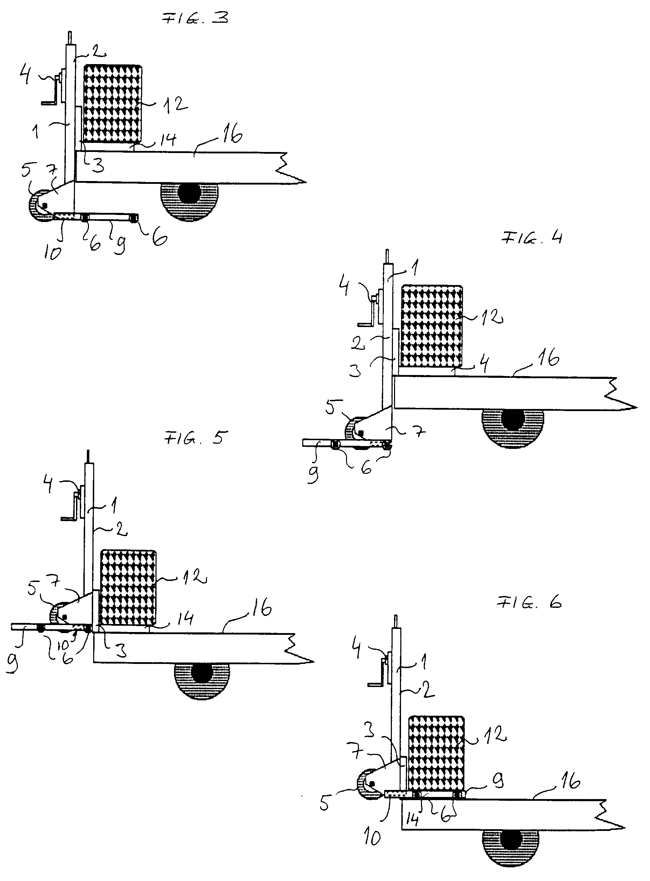

As shown in Fig. 1 and 2 the lifting device 1 according to the invention comprises a body 2 of appropriate construction, a thereto attached and in respect thereto vertically, in a controlled manner moving slide 3, further to the body 2 through an axle 8 and a supporting construction 7 attached wheels 5 and supporting arms 9 provided with wheels 6 which can be locked into their position, which arms are allowed to move, guided by a slide 10, substantially perpendicularly with respect to the plane of the body 2. The body 2 is preferably manufactured of appropriate steel profiles and plate elements by welding. A fork-model sliding carrier 3, preferably of steel construction, is in an in itself known manner, e.g. through rolls, coupled to be movable, supporting itself to the profile shape of stanchions 11 of the body 2. The height of forks 14, which support a load 12, of the sliding carrier 3 slightly exceeds the constructional height of supporting arms 9 provided with wheels 6. The wheels 5 and 6 generally lie on a plane generally parallel with said first or second plane 16. The lower surface of the wheels 5, 6 lies appropriately below the other constructional elements of the device according to the invention. Of the wheels 6, which in an in itself known manner have been fixed into connection with the supporting arms and of which there preferably are at least two pairs as shown in the Figures, one pair is of the free-rotating i.e. not direction-bound type. When the wheels 5 have been realized as not direction-bound or steerable, the other wheel pair 6 are not steerable. The wheels 6 are placed in the supporting arms 9 in such a way that in the projected position as shown in Fig. 1 of the supporting arm 9 they are located substantially underneath the load 12 and in the position where the arm has been pulled back as shown in Fig. 5 substantially behind the sliding carrier 3.

The lifting mechanism 4 of the lifting device may be a transmission mechanism utilizing an in itself known screw, a chain gearing, hydraulics, pneumatics etc., by which the vertical position of the sliding carrier 3 with respect to the body 2 is guidedly adjusted either at a shaft 13 by using muscular work, by means of an electric motor through push-button control or in some other way. The said guiding results in that while the wheels 5,6 of the lifting device 1 are in touch with the base, it is possible by means of the lifting mechanism 4 to freely adjust the vertical position of the sliding carrier 3 and the load 12 on it in respect to the body 2, within the limits set by the construction. Likewise, when the sliding carrier 3 again is supported e.g. to the platform of the vehicle, Fig. 3, 4 and 5, the position of the body 2 in respect to the sliding carrier 3 can be adjusted by the lifting mechanism 4.
Fig. 8 presents a solution for a preferable guiding principle of the supporting arm 9 in the direction permitted to its movement. The slide element 10 comprises more than one sequentially installed bearings 15 which have been fixed to the body construction 7, 11 in a known way. The supporting arm 9 is formed of an appropriate profile, e.g. a C-profile, which at its inner surface bears against bearings 15. The slide element 10 may also be made of into a functional form cut steel bar or profile which is provided with plates promoting the sliding of the supporting arm 9 or alternatively with lubrication. The position of the supporting arm 9 in respect to the body construction 7,11 is adjusted for example by muscular force and the supporting arm can be locked into this position for example by using in itself known pin locking systems or similar. The position of the supporting arm 9 may also be adjusted by different known lever-spring-return constructions, which can be arranged to be controlled at the upper part of the lifting device 1 by in itself known remote-control devices.

In the following there is described the use in the loading of a vehicle of the lifting device 1 according to the invention:
- in accordance with Fig. 1 and 2, the lifting device is loaded in a known manner with a load 12 which may be for example a payload on a truck pallet or similar, or a mere truck pallet etc.,
- the lifting device 1 is pushed by muscular force, or, if it is provided for example with an electric motor and batteries, guided mechanically to the proximity of the platform 16; during the moving the not-direction-bound wheels seek their direction guided by the moving force.

The moving can also be carried out by tipping the lifting device 1 appropriately into the side opposite the load 12 in such a manner that the weight of the lifting device 1 and the load 12 substantially rests on the wheels 5 and the supporting arms 9 with wheels 6 do not bear against the base.
- by the lifting mechanism 4 the sliding carrier 3 with the forks 14 and the load 12 is guidedly adjusted at such a height above the base that the lifting device 1 can be pushed into the position shown in Fig. 3, whereby the sliding carrier 3 and the load 12 substantially rest on the platform 16, the supporting arms 9 with wheels 6 bear against the base and are hereby guided beneath the platform 16
- by adjusting the lifting mechanism 4 the sliding carrier 3 with the load 12 is lowered to be borne by the platform 16
- the lockings of the supporting arms 9 are released and the lifting arms 9 with the wheels 6 are pulled into the position shown in Fig. 4 in which they are substantially located on the side of the body 2 that is opposite the sliding carrier 3; the supporting arms 9 may also be provided with an in itself known locking into this position, however, this is not a necessity, because they are not under stress in this position
- by adjusting the the lifting mechanism 4 appropriately and with the sliding carrier 3 with the load 12 being supported onto the platform 16, the body construction of the lifting device is lifted into such a height in respect to the carrier 3 that the supporting arms 9 with the wheels 6 can be pushed past the forks 14 underneath the load 12 and locked into their position; at the lifting stage, if the supporting arms 9 are not provided with a locking into the rear position, special care shall be taken to prevent the chance that they during the lifting operation move underneath or against the platform 15 and thus are damaged
- the sliding carrier 3 with the load 12 is by adjusting the lifting mechanism 4 lifted slightly upwards on the plane of the platform 16 and the load 12 is by the lifting device 1 moved to a desired location on the platform 16
- the load 12 is in a known manner lowered onto the plane of the platform 16 and the lifting device is pulled out from underneath the load 12
- a loaded or unloaded lifting device 1 according to the invention is removed from the platform 16 by taking the above steps in a reverse order.

The sliding carrier 3 may, besides the above described forks 14, also be provided with a variety of other known devices facilitating the pulling on and pushing out of the load 12, e.g. a roll-table or similar. The construction of the sliding carrier 3 of the lifting device 1 according to the invention and the positions of the supporting arms 9 with respect thereto have preferably been selected so as to allow the handling of standard pallets. The wheels 5 or one pair of wheels 6 of the lifting device 1 may be provided with an in itself known transmission using either the same power source with the lifting mechanism 4 or a separate one. The lifting device 1 provided with driving wheels in the manner described above enables the moving of heavier loads 12 also on slanting bases. The ends opposite the sliding carrier 3 of the forks 14 may be provided with a counterweight to balance a tipping force that may appear in planar moving of an unloaded lifting device 1 with the supporting arms 9 pulled into a rear position. The wheels of the lifting device according to the invention may also be selected so that both pairs of wheels 6 are direction-bound but that the location of the wheels 6 which are closer to the body construction 7, 11 is slightly above the plane formed by the other wheels 6 and the not direction-bound wheels 5. Thus e.g. when the lifting device 1 is being pushed onto the platform 16 of the vehicle, the wheels 6 first bear against the plane of the platform and a minor lifting work must be done to lift the wheels 5 onto the platform 16. If the measurements have been selected appropriately, this will not cause any major trouble or stress.
The lifting device according to the invention may replace a tail lift mounted on a vehicle and it can be used for the handling of a variety of loads, e.g. those intended to be transported by means of so-called hand pallet trucks both outside the vehicle and in the platform space. Besides for loading vehicles, the lifting device can also be used in other forms of load transport and handling, particularly advantageously in cases involving changing of travelling plane that cannot be carried out travelling on wheels. The lifting device may also be provided with a battery driven electric motor which operates a lifting screw by means of a push-button control or similar. If the lifting device is carried with the vehicle, the charging of the batteries can be arranged to take place during the transport by using the dynamo of the vehicle. In, this case the lifting device replaces the hand pallet truck and the stationary tail lift. In any case it is to be understood that the invention has above been explained with reference to a few preferable embodiments only, however, not desiring in any way to restrict the invention to these exemplary embodiments only, several modifications being possible within the scope of the inventive idea as defined by the patent claims now following.

## Claims

1. A lifting device (1) for
a) moving a load (12) on a first plane, lifting it onto a second plane (16) and further moving the load (12) on said second plane (16), having
b) load (12) carrying constructional elements (3, 14) movably engaged with an upright body (2) defining a generally vertical plane, the elements (3, 14) being movable by means of a lifting mechanism (4),
c) the body (2) being supported on wheels (5, 6) being placed on three axle lines in such a way that a first pair of first wheels (5) are placed on a first axle line (8) and two pairs of second wheels (6) are placed on a second and a third axle line in such a way that one pair of said second wheels are placed on the second axle line and the other pair of said second wheels are placed on the third axle line, said first pair of first wheels (5) and said two pairs of second wheels (6) generally lying on a plane generally parallel with said first or second (16) plane, wherein the lifting device (1) running on either the first or second plane may have the wheels of two axles lines on said generally parallel plane,
d) each wheel (5, 6) being interconnected with the body (2) by means of supporting members (7, 9) some of these members comprising supporting arms (9) positioned on a level underneath the load carrying constructional elements,
e) each wheel (5, 6) having a generally horizontal directed rotation axis,
f) the first wheels (5) being mounted to the body (2) on the side of the plane of the body (2) opposite the load (12) and the load carrying constructional elements (3, 14),
g) the first wheels (5) being not direction-bound,
h) said supporting arms (9) carry at least the second and the third axle line and are provided with second wheels (6),
i) at least the second wheels (6) of one of the second and the third axle line are direction-bound,
j) the second wheels (6) of one of the second and the third axle line are located in the extreme end of the supporting arms (9), the second wheels (6) of the other of the second and the third axle line are placed
on an axle line which is positioned between the first axle line of the stationarily mounted first wheels (5) and the axle line of the second wheels (6) which are placed at the extreme end of the supporting arms (9),
**characterized** in that
k) said supporting arms (9) are movable substantially perpendicularly with respect to the plane of the body (2) to be pushed underneath the load or to a position on the opposite side of the body to that of the load,
and that the second wheels of the other of the second and third axle lines are placed
slightly above the plane defined by the second wheels (6) located in the extreme end of the supporting arms (9) and the stationarily mounted first wheels (5).

2. Device according to claim 1, wherein the second wheels (6) of the second and the third line are direction-bound.

3. Device according to claim 1 or 2, wherein the load (12) carrying constructional elements (3, 14) are formed as lifting forks (14) being provided with a counterweight to balance the device (1) in the case it is not supported by the first wheels (5).

## Patentansprüche

1. Hebevorrichtung (1) zum
a) Bewegen einer Last (12) auf einer ersten Ebene, Heben der Last auf eine zweite Ebene (16) und Weiterbewegen der Last auf der zweiten Ebene (16), mit
b) Lasttragekonstruktionselementen (3, 14), die mit einem aufrechten Körper (2), der eine im wesentlichen vertikale Ebene festlegt, beweglich verbunden sind, wobei die Elemente mittels eines Hebemechanismus (4) bewegbar sind,
c) wobei der Körper (2) von Rädern (5, 6) getragen wird, die auf drei Achslinien in der Weise angeordnet sind, daß ein erstes Paar von ersten Rädern (5) auf einer ersten Achslinie (8) und zwei Paare von zweiten Rädern (6) auf einer zweiten und einer dritten Achslinie angeordnet sind, so daß ein Paar der zweiten Räder auf der zweiten Achslinie und das andere Paar der zweiten Räder auf der dritten Achslinie angeordnet ist, wobei das erste Paar von ersten Rädern (5) und die beiden Paare von zweiten Rädern (6) im wesentlichen in einer Ebene liegen, die parallel zur ersten oder zweiten (16) Ebene liegt, wobei die Hebevorrichtung (1), die auf entweder der ersten oder der zweiten Ebene läuft, die Räder zweier Achslinien auf der im wesentlichen parallelen Ebene haben kann,
d) wobei jedes Rad (5, 6) mit dem Körper (2) über Tragteile (7, 9) verbunden ist, wobei einige dieser Teile Tragarme (9) aufweisen, die auf einer Ebene angeordnet sind, die unterhalb der Lasttragekonstruktionselemente liegt,
e) wobei jedes Rad (5, 6) eine im wesentlichen horizontal orientierte Drehachse hat,
f) wobei die ersten Räder (5) am Körper (2) auf der Seite der Ebene des Körpers (2) gegenüber der Last (12) und der Lasttragekonstruktionselemente (3, 14) angeordnet sind,
g) wobei die ersten Räder (5) nicht richtungsgebunden sind,
h) wobei Tragarme (9) wenigstens die zweite und die dritte Achslinie tragen und mit zweiten Rädern (6) versehen sind,
i) wobei wenigstens die zweiten Räder (6) einer, der zweiten und der dritten Achslinie richtungsgebunden sind,
j) wobei die zweiten Räder (6) einer, der zweiten und der dritten Achslinie am äußersten Ende der Tragarme (9), die zweiten Räder (6) der anderen, der zweiten und der dritten Achslinie auf einer Achslinie angeordnet sind, die zwischen der ersten Achslinie der stationär befestigten Räder (5) und der Achslinie der zweiten Räder (6) angeordnet sind, die am äußersten Ende der Tragarme (9) angeordnet sind,
dadurch **gekennzeichnet**, daß
k) die Tragarme (9) im wesentlichen senkrecht zur Ebene des Körpers (2) beweglich sind, um unter die Last oder in eine Stellung auf der der Last gegenüberliegenden Seite des Körpers geschoben zu werden,
und daß die zweiten Räder der anderen der zweiten und dritten Achslinien etwas überhalb der Ebene angeordnet sind, die durch die zweiten Räder (6) am äußersten Ende der Traganne (9) und der stationär befestigten ersten Räder (5) definiert ist.

2. Vorrichtung nach Anspruch 1, bei der die zweiten Räder (6) der zweiten und dritten Linie richtungsgebunden sind.

3. Vorrichtung nach Anspruch 1 oder 2, bei der die Lasttragekonstruktionselemente (3, 14) als Hebegabeln (14) ausgebildet sind, die mit einem Gegengewicht versehen sind, um die Vorrichtung (1) für den Fall, daß sie nicht durch die ersten Räder (5) getragen wird, im Gleichgewicht zu halten.

## Revendications

1. Dispositif de levage (1) pour :
a) déplacer une charge (12) sur un premier plan, la lever jusqu'à un second plan (16) et déplacer en outre la charge (12) sur ledit second plan (16), comprenant
b) des éléments structuraux (3, 14) de maintien de charge (12) coopérant de manière mobile avec un corps vertical (2) définissant un plan sensiblement vertical, les éléments (3, 14) étant mobiles au moyen d'un mécanisme de levage (4),
c) le corps (2) étant supporté par des roues (5, 6) placées sur trois lignes d'axe de telle manière qu'une première paire de premières roues (5) est placée sur une première ligne d'axe (8) et deux paires de secondes roues (6) sont placées sur une deuxième et une troisième ligne d'axe de telle manière qu'une paire desdites secondes roues est placée sur la deuxième ligne d'axe et l'autre paire desdites secondes roues est placée sur la troisième ligne d'axe, ladite paire de premières roues (5) et lesdites deuxièmes paires de secondes roues (6) se trouvant sensiblement sur un plan sensiblement parallèle avec ledit premier ou second plan (16), dans lequel le dispositif de levage (1) en fonctionnement soit sur le premier ou le second plan peut avoir les roues de deux lignes d'axe sur ledit plan sensiblement parallèle,
d) chaque roue (5, 6) étant interconnectée avec le corps (2) au moyen d'organes de support (7, 9), dont certains comprennent des bras de support (9) positionnés sous les éléments structuraux de maintien de charge,
e) chaque roue (5, 6) ayant un axe de rotation dirigé sensiblement horizontalement,
f) les premières roues (5) étant montées sur le corps (2) sur le côté du plan du corps (2) opposé à la charge (12) et aux éléments structuraux (3, 14) de maintien de charge,
g) les premières roues (5) n'étant pas liées en direction,
h) lesdits bras de support (9) maintenant au moins la deuxième et la troisième lignes d'axe et étant munis de secondes roues (6),
i) au moins les secondes roues (6) de l'une des deuxième et troisième lignes d'axe sont liées en direction,
j) les secondes roues (6) de l'une des deuxième et des troisième lignes d'axe sont situées à l'extrémité finale des bras de support (9), les secondes roues (6) de l'autre de la deuxième et de la troisième lignes d'axe étant placées sur une ligne d'axe qui est positionnée entre la première ligne d'axe des premières roues (5) montées de manière fixe et la ligne d'axe des secondes roues (6) placées à l'extrémité finale des bras de support (9), caractérisé en ce que
k) lesdits bras de support (9) sont mobiles sensiblement perpendiculairement par rapport au plan du corps (2) pour être poussés sous la charge ou dans une position sur le côté du corps opposé à celui de la charge, et en ce que les secondes roues de l'autre de la deuxième ou troisième lignes d'axe sont placées légèrement au-dessus du plan défini par les secondes roues (6) situées à l'extrémité finale des bras de support (9) et par les premières roues (5) montées de manière fixe.

2. Dispositif selon la revendication 1, dans lequel les secondes roues (6) de la deuxième et de la troisième lignes sont liées en direction.

3. Dispositif selon la revendication 1 ou 2, dans lequel les éléments structuraux (3, 14) de maintien de charge (12) sont formées comme des fourches de levage (14) munies d'un contrepoids pour équilibrer le dispositif (1) dans le cas où il n'est pas supporté par les premières roues (5).
